# EUROPEAN PATENT SPECIFICATION

(11) **EP 2 002 703 B1**
(45) Date of publication and mention of the grant of the patent: **11.08.2010**
(21) Application number: 08157760.3
(22) Date of filing: 06.06.2008
(51) Int. Cl.: A01D 34/68

(54) **Neutral adjustment mechanism**
Neutraler Einstellmechanismus
Mécanisme d'ajustement neutre

(30) Priority: 12.06.2007 US 761725
(43) Date of publication of application: 17.12.2008
(73) Proprietor: Deere & Company, Moline, IL 61265-8098 (US)
(72) Inventor: Hoffman, Brad Allen, Cary, NC 27513 (US); Lewis, Franklin, Fuquay-Varina, NC 27526 (US)
(74) Representative: Löser, Iris

(56) References cited:
- EP-A- 1 867 227
- US-A1- 2006 174 601
- US-A1- 2007 068 711
- US-B1- 6 434 917

## Description

This invention relates to grass mowing machines, and specifically to zero turning radius ("ZTR") mowers having independently powered left and right drive wheels controlled by a pair of control levers or sticks (see e.g. US 2007/068711).

Grass mowing machines known as zero turning radius ("ZTR") mowers have at least one independently powered drive wheel on each side of a frame. One drive wheel may be operated in a forward direction while the other drive wheel may be stopped or operated in reverse. Many ZTR mowers have a twin stick control system. A pair of control levers or sticks may be provided side-by-side, with each lever or stick controlling one of the drive wheels. When both levers or sticks are advanced together forwardly out of their neutral position, both drive wheels rotate forwardly to cause the mower to move forward. A ZTR mower may be steered by advancing one lever or stick more than the other.

Typically, each control lever or stick on a ZTR mower may be linked to a pump arm of one of two separate hydraulic pumps, or of a dual hydraulic pump; i.e., a separate pump for each wheel. The lever or stick may be used to move a pump swash plate through a direct linkage.

The control levers or sticks on a ZTR mower may be mounted on the vehicle frame so that each has a first pivot axis allowing the lever or stick in the operating position to pivot forwardly in an arc to turn the wheel in forward, or pivot rearwardly to turn the wheel in reverse. Additionally, the operator can pivot each lever or stick to a neutral operating position, and then pivot each lever or stick outwardly in an arc to a non-operating or park position. If both levers or sticks are pivoted to neutral, the ZTR mower should be stationary, both levers or sticks should be at the same position, and both levers or sticks should align with slots so that they can pivot outwardly to park. An operator may need to make neutral adjustments to the linkages if the levers or sticks are misaligned in the neutral position, due to wear, age or loosening of components of the ZTR mower.

Neutral adjustments for levers or sticks on ZTR mowers typically require the operator to step off the machine to make the adjustments. The operator may have to flip up the seat or remove a panel to access the adjustment points. Once the operator can access the steering linkages, he or she must loosen the links, which may be include turnbuckle and/or jam nuts, to make the adjustments. The operator then must retighten the steering linkages. The operator also may need to lift the rear of the unit off the ground to prevent the machine from moving during the adjustment.

There is a need for a simple and inexpensive neutral adjustment mechanism for dual lever steering controls on a ZTR mower that does not require the operator to get off the machine while making the adjustments. A neutral adjustment mechanism is needed that does not require flipping up a seat, removing a panel, lifting the rear of the machine, or turning off the machine to access the adjustment points. A neutral adjustment mechanism is needed that allows adjustments to be performed with minimal effort.

It is therefore the object of the present invention to comply with one, several or all of these desires.

This object is met according to the invention by the teaching of claim 1, while features developing the solution in an advantageous manner are set forth in the further claims.

According to a first embodiment a neutral adjustment mechanism for dual lever steering controls on a ZTR mower may include a pair of adjustable length steering links, each steering link connecting between one of the steering levers and a hydrostatic transmission pump. Each steering link is moveable axially with forward and reverse pivoting of the steering lever to which it is connected. Each steering link includes an easily accessible adjustment point that can be turned to adjust the length of the steering link with minimal effort and without stepping off the mower, shutting down the mower, or moving the operator seat.

In a second embodiment a neutral adjustment mechanism for dual lever steering controls may have a pair of levers that are each independently pivotable forward and reverse to drive a zero turning radius mower, a control pivot connected to each lever of the dual lever steering controls that pivots with forward and reverse pivoting of each lever, a steering link having a first end with an adjustment point, a ball joint adjacent the adjustment point connecting the steering link to the control pivot, and a second end pivotably connected to an input control lever of a hydrostatic transmission pump; an operator seat positioned over the steering link. The adjustment point may be accessible for changing the position of the steering link relative to the ball joint with the operator seat in place.

The neutral adjustment mechanism may further comprise a spring between the pivotable connection and a stop.

The neutral adjustment mechanism may further comprise a damper pivotably connected to the control pivot.

It may be provided a panel in front of the steering links having neutral adjustment access holes through which the adjustment points can be accessed.

According to another embodiment a neutral adjustment mechanism for dual lever steering controls may have two levers that are each independently pivotable forward and reverse to drive a zero turning radius mower, a steering link connected to each lever, each steering link having a length between a ball joint and a hydrostatic transmission input control arm, each steering link moving axially in response to forward or reverse pivoting of the lever; an adjustment point threaded to each steering link and rotatable to change the length of the steering link; a spring around each steering link to provide tightening force against the adjustment point and a panel in front of the adjustment points having neutral adjustment access openings through which each adjustment point may be rotated.

A damper may be connected to each input control arm.

The first end of the steering link may be threaded.

The lever may be outwardly pivotable in a neutral position.

The neutral adjustment mechanism may further comprise an operator seat over the steering link and neutral adjustment access openings.

An embodiment of the invention described below is shown in the drawings, in which
- Fig. 1: is a perspective view of a ZTR mower having a neutral adjustment mechanism for dual lever steering controls according to a first embodiment of the invention.
- Fig. 2: is a perspective view of a neutral adjustment mechanism for dual lever steering controls on a ZTR mower according to a first embodiment.

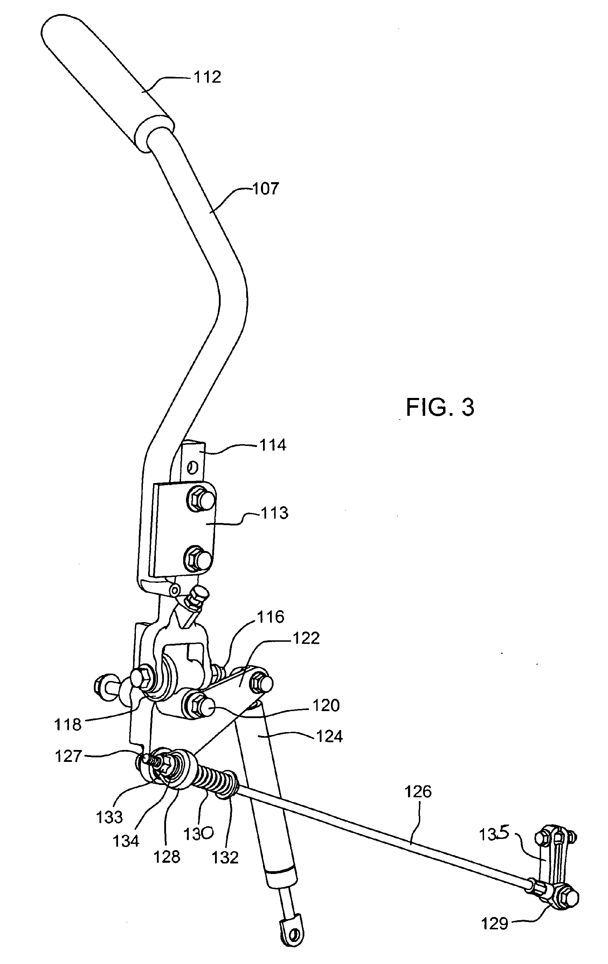

- Fig. 3: is a perspective view of the neutral adjustment mechanism of the first embodiment.

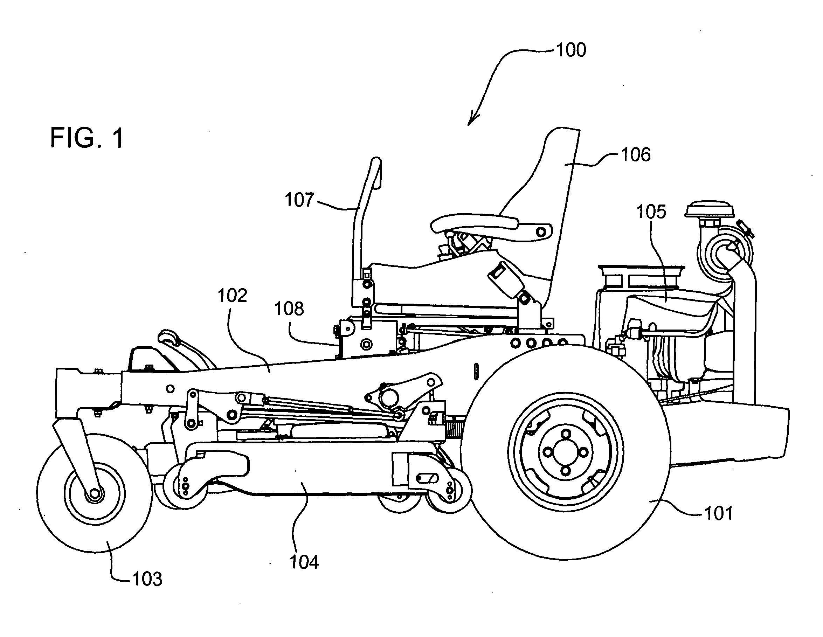

The present invention may be used with zero turning radius ("ZTR") mower 100 shown in Fig. 1, having at least one drive wheel 101 on each side that is independently powered to rotate independently of the other drive wheel. Each independent drive may include a separate hydrostatic drive motor coupled to each wheel. The pair of drive motors may be connected via hydraulic conduits to a dual hydrostatic pump; i.e., a separate pump for each wheel. Each side of the dual hydrostatic pump may have a swash plate that may define a pump stroke between a neutral position and a full forward position. The ZTR mower may have a frame 102 supported on a forward end by front wheels 103, and suspending a mower deck 104 between the front and rear wheels. The ZTR mower may have a rear-mounted engine 105 behind an operator seat 106. The seat may be mounted over the frame for a seated operator to use left and right control arms 107, here shown in the neutral position. As will be explained in more detail below, linkages between the control arms and dual hydrostatic pump may be located under the operator seat, and behind panel 108.

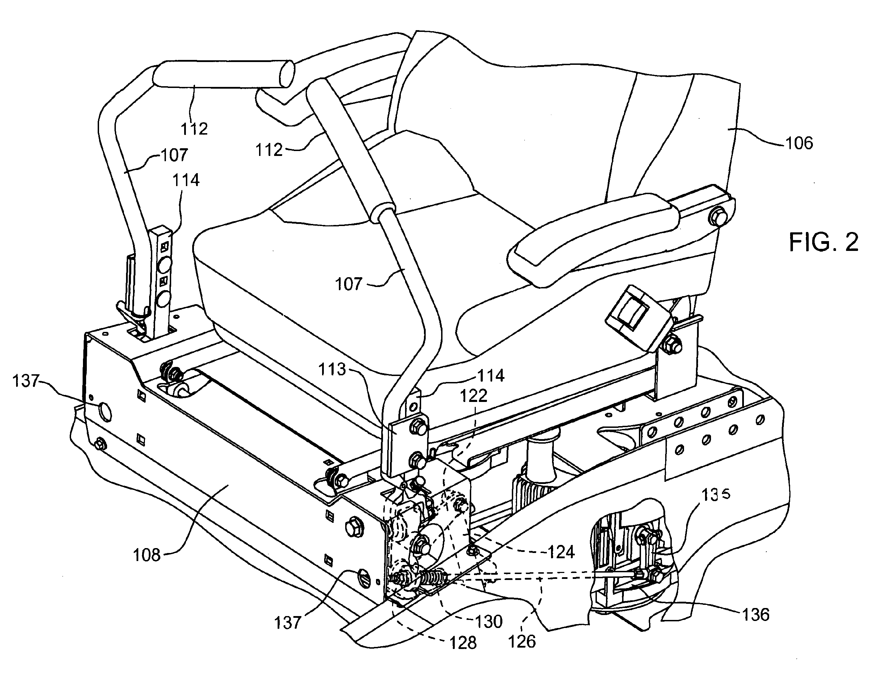

Now referring to Fig. 2, left and right motion control levers or sticks 107 may be used to drive a ZTR mower. Each control lever or stick may be mounted to the ZTR mower so that the lever may pivot forwardly to move a swash plate in a hydrostatic pump in a first direction to cause a drive wheel to rotate forward, or pivot rearwardly to move the swash plate in a second direction to cause the drive wheel to rotate backward. Each control lever or stick may have a neutral position in which the corresponding drive wheel is at rest. The pair of control levers or sticks may be mounted in front of operator's seat 106 on a ZTR mower.

In one embodiment, the lower end of each control lever or stick 107 may be mounted so that each lever or stick can move independently of the other. In Fig. 1, both levers or sticks are in the neutral position. Each control lever or stick may have a grip 112 at its first or upper end, and may be fastened with bolts through bracket or plate 113 to neutral position lever 114 at its second or lower end. The neutral position lever may pivot on a first axis defined by shaft or threaded fastener 116 extending through forward/reverse lever 118. Each forward/reverse lever may pivot on a second axis defined by a transverse shaft or threaded fastener 120 that is perpendicular to the first axis. Control pivot 122 may be connected to each lever of the dual lever steering controls, so that the control pivot can pivot with forward and reverse pivoting of each lever. Control pivot 122 may be integrally formed with and extend generally rearwardly from forward/reverse lever 118. Damper 124 and steering linkage 126 each may be separately fastened to control pivot 122 as will be explained below.

In one embodiment, steering link 126 may be a rod having a first end 127 and a second end 129. The steering link moves axially in response to forward or reverse pivoting of a steering lever to which it is connected. The steering link may have an adjustment point adjacent the first end. Front ball joint 128 may be adjacent the adjustment point, and may connect the steering link to control pivot 122. The second end of the steering link may be pivotably connected to an input control lever of a hydrostatic transmission pump.

In one embodiment, steering link 126 adjacent the first end 127 may be externally threaded. The adjustment point may be threaded to the steering link so that it may be rotated to change the position of the steering link relative to front ball joint 128. The adjustment point can change the length of the steering link between front ball joint 128 and the input control lever of a hydrostatic transmission pump. The first end 127 of the steering link may extend through and beyond front ball joint 128 mounted to control pivot 122. The first end of the steering link may be shifted fore or aft by turning adjustment point 133, to change the length of steering link 126 between front ball joint 128 and hydrostatic pump 136. Washer 134 or resilient collar may be positioned around steering link 126 between front ball joint 128 and adjustment point 133.

In one embodiment, compression spring 130 may be positioned around the steering link between front ball joint 128 and stop 132 which may be a collar or threaded fastener on the steering linkage. The second end of steering link 126 may be pivotably attached with swivel joint 129 to input control lever 135 of hydrostatic pump 136. The compression spring around the steering link may provide tightening force against the adjustment point. Damper 124 may be fastened to the frame of the ZTR mower.

In one embodiment, adjustment points 133 are positioned so that they can be easily accessed from the front end of the ZTR mower. Operator seat 106 may be located over the steering links. Panel 108 may be a vertical or near-vertical sheet metal member positioned in front of and below the operator seat, in front of the steering links. Panel 108 may have neutral adjustment access holes or openings 137 for adjusting each steering link. With the operator seat in place, the seat is above the neutral adjustment access holes, but does not block access to the holes. Each adjustment point 133 is easily accessible behind a neutral adjustment access hole 137 in panel 108 in front of seat 106. Positioning the adjustment points behind neutral adjustment access holes 137 allows an operator to make adjustments to steering links 126 from the seat or front of a ZTR mower, without removing panels or flipping the seat. The operator may turn the adjustment points using a control knob or a socket to adjust each steering link to a neutral position, even while the ZTR mower is running in neutral. Making the adjustments to the steering links while operating the mower in neutral may help the operator obtain correct steering link lengths in the neutral position.

In one embodiment, springs 130 behind front ball joints 128 allow adjustment of steering links 126 to the neutral position without loosening linkage hardware. Each spring 130 may be preset to a specified spring force, and springs having different rates may be used to obtain softer or harder feel for the forward/reverse controls. For example, the spring force can be changed to prevent the machine from being too aggressive in forward or reverse with a rapid control stroke. Additionally, the springs on the steering links can prevent damage to the ZTR steering system if the operator were to bottom out the stroke transmission while actuating the control levers.

Having described the preferred embodiment, it will become apparent that various modifications can be made without departing from the scope of the invention as defined in the accompanying claims.

## Claims

1. A neutral adjustment mechanism for dual lever steering controls having two levers (107) that are each independently pivotable forward and reverse to drive a zero turning radius mower, comprising a pair of adjustable length steering links (126), each steering link (126) connecting between one of the levers (107) and a hydrostatic transmission pump (136) , each steering link (126) moveable axially with forward and reverse pivoting of the steering lever (107) to which it is connected; an operator seat (106) over the steering links (126) **characterised by** an access, preferably a pair of access holes (137) under the operator seat (106) through which the length of the steering links (126) may be adjusted.

2. The neutral adjustment mechanism according to claim 1, **characterized in that** each adjustable length steering link (136) has a threaded end (127) with an adjustment point (133) threaded thereto.

3. The neutral adjustment mechanism according to claim 1 or 2, **characterized by** a spring (130) to hold the adjustment point (133) in place.

4. The neutral adjustment mechanism according to one or several of the previous claims, **characterized by** a ball joint (128) between each steering link (126) and lever (107).

5. The neutral adjustment mechanism according to one or several of the previous claims, **characterized by** a damper (124) connected to each lever (107).

6. The neutral adjustment mechanism according to one or several of the previous claims, **characterized in that** each lever (107) is pivotable outwardly from a neutral position.

## Patentansprüche

1. Neutraleinstellmechanismus für Doppelhebellenkungsbetätigung mit zwei Hebeln (107), die jeweils unabhängig nach vorne und nach hinten geschwenkt werden können, um einen Nullwendekreismäher anzutreiben, umfassend ein Paar einstellbarer Lenkarme (126), wobei jeder Lenkarm (126) zwischen einem der Hebel (107) und einer hydrostatischen Getriebepumpe (136) verbunden ist, wobei jeder Lenkarm (126) in Axialrichtung mit Vorwärts- und Rückwärtsschwenken des Lenkhebels (107), mit dem er verbunden ist, beweglich ist; einen Bedienersitz (106) über den Lenkarmen (126), **gekennzeichnet durch** einen Zugang, vorzugsweise ein Paar Zugangslöcher (137) unter dem Bedienersitz (106), **durch** die die Länge der Lenkarme (126) eingestellt werden kann.

2. Neutraleinstellmechanismus nach Anspruch 1, **dadurch gekennzeichnet, dass** jeder Lenkarm (126) mit einstellbarer Länge ein Gewindeende (127) mit einem damit verschraubten Einstellpunkt (133) aufweist.

3. Neutraleinstellmechanismus nach Anspruch 1 oder 2, **gekennzeichnet durch** eine Feder (130) zum Inpositionhalten des Einstellpunkts (133).

4. Neutraleinstellmechanismus nach einem oder mehreren der vorhergehenden Ansprüche, **gekennzeichnet durch** ein Kugelgelenk (128) zwischen jedem Lenkarm (126) und Hebel (107).

5. Neutraleinstellmechanismus nach einem oder mehreren der vorhergehenden Ansprüche, **gekennzeichnet durch** einem Dämpfer (12), der mit jedem Hebel (107) verbunden ist.

6. Neutraleinstellmechanismus nach einem oder mehreren der vorhergehenden Ansprüche, **dadurch gekennzeichnet, dass** jeder Hebel (107) aus einer Neutralstellung nach außen schwenkbar ist.

## Revendications

1. Mécanisme d'ajustement neutre pour des commandes de direction à double levier ayant deux leviers (107) qui peuvent chacun pivoter indépendamment vers l'avant et l'arrière pour entraîner une tondeuse à rayon de rotation nul, comprenant une paire de barres de direction de longueur ajustable (126), chaque barre de direction (126) étant connectée entre l'un des leviers (107) et une pompe à transmission hydrostatique (136), chaque barre de direction (126) pouvant être déplacée axialement avec un pivotement vers l'avant et vers l'arrière du levier de direction (107) auquel elle est connectée ; et un siège d'opérateur (106) par-dessus les barres de direction (126), **caractérisé par** un accès, de préférence une paire de trous d'accès (137) sous le siège d'opérateur (106) à travers lesquels la longueur des barres de direction (126) peut être ajustée.

2. Mécanisme d'ajustement neutre selon la revendication 1, **caractérisé en ce que** chaque barre de direction de longueur ajustable (126) a une extrémité filetée (127) avec un point d'ajustement (133) fileté sur celle-ci.

3. Mécanisme d'ajustement neutre selon la revendication 1 ou 2, **caractérisé par** un ressort (130) pour retenir le point d'ajustement (133) en position.

4. Mécanisme d'ajustement neutre selon l'une quelconque ou plusieurs des revendications précédentes, **caractérisé par** un joint à rotule (128) entre chaque barre de direction (126) et le levier (107).

5. Mécanisme d'ajustement neutre selon l'une quelconque ou plusieurs des revendications précédentes, **caractérisé par** un amortisseur (124) connecté à chaque levier (107).

6. Mécanisme d'ajustement neutre selon l'une quelconque ou plusieurs des revendications précédentes, **caractérisé en ce que** chaque levier (107) peut pivoter vers l'extérieur depuis une position neutre.
